(19) Europäisches Patentamt
European Patent Office
Office européen des brevets

(11) Veröffentlichungsnummer: **0 285 984 B1**

(12) **EUROPÄISCHE PATENTSCHRIFT**

(45) Veröffentlichungstag der Patentschrift: **07.10.92**

(51) Int. Cl.$^5$: **C08L 69/00**, //(C08L69/00, 55:02,25:02,33:20)

(21) Anmeldenummer: **88105052.0**

(22) Anmeldetag: **29.03.88**

(54) **Thermoplastische Formmasse mit verbessertem Spannungsrissverhalten.**

(30) Priorität: **10.04.87 DE 3712116**

(43) Veröffentlichungstag der Anmeldung:
**12.10.88 Patentblatt 88/41**

(45) Bekanntmachung des Hinweises auf die Patenterteilung:
**07.10.92 Patentblatt 92/41**

(84) Benannte Vertragsstaaten:
**DE FR GB IT NL**

(56) Entgegenhaltungen:
**EP-A- 0 131 196**
**EP-A- 0 135 794**
**EP-A- 0 173 146**
**DE-A- 2 259 565**

(73) Patentinhaber: **BAYER AG**

**W-5090 Leverkusen 1 Bayerwerk(DE)**

(72) Erfinder: **Leitz, Edgar, Dr.**
**Goethestrasse 63**
**W-4047 Dormagen 1(DE)**
Erfinder: **Kress, Hans-Jürgen, Dr. Mobay Corporation**
**Plastics and Rubber Div. Building 8**
**Mobay Road Pittsburgh, PA 15205(US)**
Erfinder: **Wittmann, Dieter, Dr.**
**Doerperhofstrasse 15**
**W-4150 Krefeld 1(DE)**
Erfinder: **Buding, Hartmuth, Dr.**
**Liebermannstrasse 1**
**W-4047 Dormagen(DE)**

**EP 0 285 984 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind thermoplastische Formmassen, bestehend aus

A.
20-80 Gew.-Tl., vorzugsweise 40-80 Gew.-Tl., eines oder mehrerer thermoplastischer Polycarbonate,

B.
10-60 Gew.-Tl., vorzugsweise 10-40 Gew.-Tl. eines oder mehrerer Pfropfpolymerisate aus

B.1
5-90 Gew.-Tl., vorzugsweise 30-80 Gew.-Tl., einer Mischung aus

B.1.1 50-95 Gew.-Tl. Styrol, α-Methylstyrol, kernsubstituiertem Styrol, Methylmethacrylat oder Mischungen daraus, und

B.1.2
50-5 Gew.-Tl. (Meth)Acrylnitril, Methylmethacrylat, Maleinsäureanhydrid, N-substituiertem Maleinimid oder Mischungen daraus, auf

B.2
95-10 Gew.-Tl., vorzugsweise 70-20 Gew.-Tl., eines Kautschuks mit einer Glastemperatur $T_G \leqq 10°C$ und

C.
5-70 Gew.-Tl., vorzugsweise 10-40 Gew.-Tl., eines thermoplastischen Copolymerisats aus

C.1
50-95 Gew.-Tl. Styrol, α-Methylstyrol, kernsubstituiertem Styrol, Methylmethacrylat oder Mischungen daraus, und

C.2
50-5 Gew.-Tl. (Meth)Acrylnitril, Methylmethacrylat, Maleinsäureanhydrid, N-substituiertem Maleinimid oder Mischungen daraus, wobei die Summe der Gew.-Tl. aus A + B + C jeweils 100 Gew.-Tl. beträgt, die dadurch gekennzeichnet sind, daß sie

D.
1-15 Gew.-Tl., vorzugsweise 2-10 Gew.-Tl., bezogen auf 100 Gew.-Tl. A + B + C, eines hydrierten Nitrilkautschuks enthalten.

Hydrierte Nitrilkautschuke sowie ihre Herstellung sind bekannt (siehe beispielsweise US-PS 3 700 637, DE-OS 33 29 974, "Zetpol ein hochgesättiger Nitrilkautschuk", GAK, 12, 1984, Jahrgang 37, Seiten 602 bis 606 und "Therban, ein neues hitze- und quellbeständiges Elastomer" Kautschuk + Gummi Kunststoffe, 36. Jahrgang, Heft 4/83, Seiten 269-274). Sie zeichnen sich vor allem durch ihre hohe Chemikalienbeständigkeit aus.

Mischungen von thermoplastischen Polycarbonaten mit hydrierten Nitrilkautschuken sind bekannt (siehe EP-OS 0 131 196 (Le A 22 440)). Sie besitzen eine verbesserte Benzinbeständigkeit, wie im Erteilungsverfahren des entsprechenden EP-PS 0 131 196 dargelegt. Diese Mischungen können noch thermoplastische Polyester und gegebenenfalls zusätzlich kautschukelastische Pfropfpolymerisate enthalten. Die resultierenden Massen zeichnen sich durch gute Zähigkeit in Verbindung mit guter Benzinbeständigkeit aus (EP-PS 0 131 196, Seite 12, letzter Absatz und Seite 13, 2. Absatz).

Die EP-A 0 104 695 beschreibt Polycarbonat/Pfropfcopolymerisat/Copolymerisat-Mischungen, die durch Zusatz von Polyurethan eine Verbesserung der Benzinbeständigkeit erfahren.

Aus der japanischen Patentanmeldung 58 008 760 sind Polycarbonatformmassen mit verbesserter Ölbeständigkeit bekannt, die Styrol-Maleinsäureanhydrid-Copolymerisate und Polyamide zugemischt enthalten, wobei das Styrol-Maleinsäureanhydrid-Copolymer auch kautschukmodifiziert sein kann.

Ein Rückschluß auf die Verbesserung der Benzinbeständigkeit von Gemischen aus Polycarbonaten, Pfropfpolymerisaten und Copolymerisaten gemäß der in Rede stehenden Zusammensetzung A + B + C ist nicht möglich, weil Polyamide und Polyurethane strukturell nicht mit den hier in Rede stehenden hydrierten Nitrilkautschuken vergleichbar sind.

Aus der EP-OS 0 135 794 (Le A 22 390-EP) sind Mischungen von Polydiorganosiloxan-Polycarbonat-Blockcopolymeren mit einerseits ABS-Polymerisaten und andererseits mit kautschukelastischen Polymerisaten mit einer Übergangstemperatur von unter -20° C bekannt. Die Abmischungen mit ABS haben eine verbesserte Kerbschlagzähigkeit bei tiefen Temperaturen und ein verbessertes Brandverhalten. Die Abmischungen mit kautschukelastischen Polymerisaten haben ebenfalls eine verbesserte Kerbschlagzähigkeit bei tiefen Temperaturen und zeigen außerdem einen deutlich zu tieferen Temperaturen verschobenen Zäh-Spröd-Übergang. Die Beständigkeit gegen Isooctan/Toluol wird verbessert. Als kautschukelastische Polymerisate sind insbesondere auch Pfropfcopolymerisate zu verstehen. Hydrierte Nitrilkautschuke sind in EP-OS 0 135 794 nicht als kautschukelastische Polymerisate subsummiert.

Es zeigte sich nun, daß die erfindungsgemäßen thermoplastischen Formmassen, ein verbessertes Spannungsrißverhalten bei Kontakt mit organischen Medien aufweisen, wobei keine Nachteile in Bezug auf Zähigkeit und Thermostabilität in Kauf genommen werden müssen.

Erfindungsgemäß geeignete, thermoplastische, aromatische Polycarbonate (A) sind solche auf Basis der Diphenole der Formel (I)

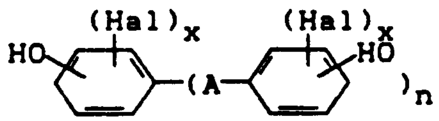

(I)

worin

A eine Einfachbindung, einen $C_1$-$C_5$-Alkylenrest, einen $C_2$-$C_5$-Alkylidenrest, einen $C_5$-$C_6$-Cycloalkylidenrest, -S-oder -$SO_2$-; Hal = Chlor oder Brom, x = 0,1 oder 2 und n = 1 oder 0 sind und gegebenenfalls zusätzlich der Formel (Ia)

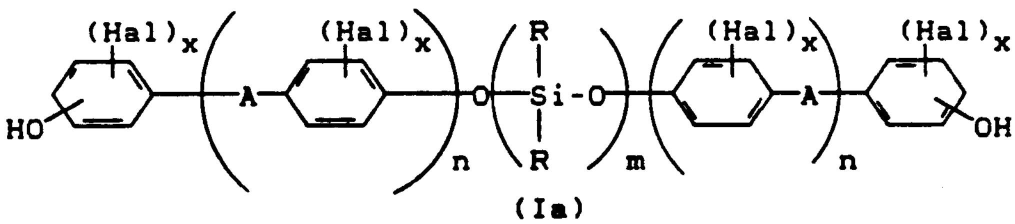

(Ia)

worin

A, Hal, x und n die für Formel (I) genannte Bedeutung haben und R gleiche oder verschiedene lineare $C_1$-$C_{20}$-Alkyl-, verzweigte $C_3$-$C_{20}$-Alkyl- oder $C_6$-$C_{20}$-Arylreste, vorzugsweise -$CH_3$ bedeutet und m eine ganze Zahl von 5 bis 100, vorzugsweise von 20 bis 80 ist.

Erfindungsgemäß geeignete Polycarbonate (A) sind Homopolycarbonate von Diphenolen der Formel (I) und Copolycarbonate von Diphenolen der Formel (I) und Diphenolen der Formel (Ia) in einer Gewichtsmenge von 1 bis 20 Gew.-%, vorzugsweise 1,5 bis 15 Gew.-% und insbesondere 2 bis 10 Gew.-%, bezogen auf das Gesamtgewicht der eingesetzten Diphenole. Geeignet sind auch Mischungen aus einem Copolycarbonat auf Basis von Diphenolen (Ia) und (I) und einem anderen siloxanfreien thermoplastischen Polycarbonat, wobei die Menge an einkondensierten Diphenolen (Ia) in der Polycarbonatmischung wiederum 1 bis 20 Gew.-% ist.

Die Diphenole der Formel (I) sind bekannt oder nach bekannten Verfahren herstellbar; Polydiorganosiloxane mit Hydroxy-aryloxy-Endgruppen gemäß Formel (Ia) sind ebenfalls bekannt (vergleiche US-PS 3 419 634) oder nach bekannten Verfahren herstellbar.

Die Herstellung erfindungsgemäß geeigneter Polycarbonate (A) ist bekannt. Man kann die Diphenole z.B. mit Phosgen nach dem Phasengrenzflächenverfahren oder in homogener Phase (dem sogenannten Pyridinverfahren) umsetzen, wobei das Molekulargewicht durch eine entsprechende Menge an Kettenabbrechern eingestellt wird (vergleiche DE-OS 3 334 782 (Le A 22 594)).

Geeignete Kettenabbrecher sind z.B. Phenol, p-Chlorphenol, p-tert.-Butylphenol und 2,4,6-Tribromphenol sowie langkettige Alkylphenole, wie 4-(1,3-Tetramethylbutyl)-phenol (gemäß DE-OS 2 842 009 (Le A 19 006)), Monoalkylphenole und Dialkylphenole mit insgesamt 8 bis 20 C-Atomen in den Alkylsubstituenten (gemäß DE-OS 35 06 472 (Le A 23 654)), wie p-Nonylphenol, 3,5-di-tert.-Butylphenol, p-tert.-Octylphenol, p-Dodecylphenol, 2-(3,5-Dimethyl-heptyl)-phenol und 4-(3,5-Dimethyl-heptyl)-phenol.

Die erfindungsgemäß geeigneten Polycarbonate (A) haben mittlere Gewichtsmittel-Molekulargewichte ($\overline{M}_w$, gemessen durch Ultrazentrifugation oder Streulichtmessung) von 10 000 bis 200 000, vorzugsweise von 20 000 bis 80 000.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methyl-butan, 1,1-Bis-(4-hydroxyphenyl)-cyclohexan, 2,2-Bis-(3-chlor-4-hydroxyphenyl)-propan, 2,2-Bis-(3,5-di-chlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (Ia) sind solche, in denen R Methyl, Ethyl, Propyl, n-Butyl, tert.-Butyl und Phenyl ist.

Bevorzugte Diphenole der Formel (Ia) sind die der Formel (Ib)

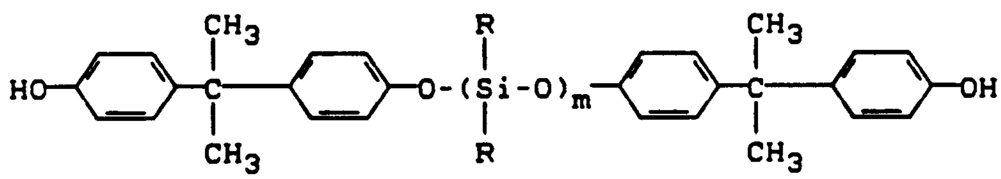

(Ib)

worin die R's gleich sind und die vorstehend genannte Bedeutung haben, also Methyl etc., und Phenyl bedeuten und "m" wiederum eine ganze Zahl zwischen 5 und 100, vorzugsweise zwischen 20 und 80, ist.

Die Herstellung der Diphenole der Formel (Ia) kann z.B. aus den entsprechenden Bis-chlorverbindungen (II)

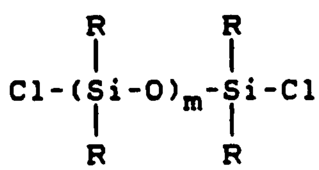

(II)

und den Diphenolen (I) z.B. gemäß US-Patent 3 419 634, Spalte 3, in Kombination mit US-Patent 3 182 662 erfolgen.

In den Bis-chlorverbindungen (II) haben R und "m" die Bedeutung wie in den Diphenolen (Ia) bzw. (Ib).

Die erfindungsgemäß geeigneten Polycarbonate gemäß Komponente A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen OH-Gruppen.

Bevorzugte Polycarbonate sind neben dem Bisphenol A-Homocarbonat die Copolycarbonate von Bisphenol A mit bis zu 15 Mol-%, bezogen auf die Mol-Summe an Diphenolen, an 2,2-Bis-(3,5-dibrom-4-hydroxyphenyl)-propan oder die Copolycarbonate der Diphenole der Formel (I) mit 1 bis 20 Gew.-% an Diphenolen der Formel (Ia), vorzugsweise der Formel (Ib), bezopgen auf die Gewichtssumme der Diphenole (I) und (Ia) bzw. (I) und (Ib).

Zur Herstellung der Pfropfpolymerisate gemäß Komponente B geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure, wie z.B. Methylmethacrylat, Ethylacrylat, Methylacrylat oder Ethylmethacrylat. Weitere geeignete Kautschuke sind z.B. Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere, wie Vinylacetat, Acrylnitril, Styrol, Methylmethacrylat und/oder Vinylether, copolymerisiert enthalten. Diese Alkylacrylatkautschuke können weiterhin kleinere Mengen, vorzugsweise bis zu 5 Gew.-%, bezogen auf Kautschukgewicht, vernetzend wirkender, ethylenisch ungesättigter Monomerer enthalten. Solche Vernetzer sind z.B. Alkylendiol-di-(meth)-acrylate,Polyester-di-(meth)-acrylate, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dien, wie Polybutadien oder ein Copolymerisat eines konjugierten Diens mit einem ethylenisch ungesättigten Monomer, wie Styrol und/oder Acrylnitril, als Kern enthalten. Andere geeignete Kautschuke sind z.B. EPDM-Kautschuke, also Kautschuke aus Ethylen, Propylen und einem unkonjugierten Dienmonomer.

Bevorzugte Kautschuke zur Herstellung der Pfropfpolymerisate B sind Dien- und Alkylacrylatkautschuke.

Die Kautschuke liegen im Pfropfpolymerisat B in Form wenigstens partiell vernetzter Teilchen einer

mittleren Teilchengröße von 0,09 bis 5 µm, vor. Die Pfropfpolymerisate B werden durch radikalische Pfropfpolymerisation der eingangs definierten Monomerengemische aus B.1.1 und B.1.2 in Gegenwart der zu pfropfenden Kautschuke B.2 hergestellt und sind durchweg bekannt.

Bevorzugte Herstellungsverfahren für die Pfropfpolymerisate B sind Emulsions-, Lösungs-, Masse- oder Suspensionspolymerisation. Besonders bevorzugte Pfropfpolymerisate B sind die sogenannten ABS-Polymerisate. Als kernsubstituierte Styrole seien Halogenstyrole und p-Methylstyrol erwähnt.

Bevorzugte Copolymerisate gemäß Komponente C sind solche aus wenigstens einem Monomeren aus der Reihe Styrol, α-Methylstyrol, kernsubstituiertem Styrol gemäß C.1 mit wenigstens einem Monomeren aus der Reihe Acrylnitril, Methacrylnitril, Methylmethacrylat, Maleinsäureanhydrid, N-substituiertes Maleinimid gemäß C.2.

Copolymeriste gemäß Komponente C entstehen häufig bei der Pfropfpolymerisation zur Herstellung der Komponente B als Nebenprodukte, besonders dann, wenn große Mengen auf kleine Mengen Kautschuk gepfropft werden.

Die erfindungsgemäß einzusetzende Menge an Copolymerisat C von 5 bis 70 Gew.-Tl., bezogen auf 100 Gew.-Tl. aus A + B + C, bezieht diese Nebenprodukte der Pfropfpolymerisation nicht mit ein.

Die Copolymerisate gemäß Komponente C sind harzartig, thermoplastisch und kautschukfrei. Besonders bevorzugte Copolymerisate C sind solche aus Styrol und/oder α-Methylstyrol mit Acrylnitril und gegebenenfalls mit Methylmethacrylat.

Besonders bevorzugte Gewichtsverhältnisse im thermoplstischen Copolymerisat C sind 60 bis 80 Gew.-% C.1 und 40 bis 20 Gew.-% C.2.

Die Copolymerisate gemäß Komponente C sind bekannt und lassen sich durch radikalische Polymerisation, insbesondere durch Emulsions-, Suspensions-, Lösungs- oder Massepolymerisation herstellen. Die Copolymerisate gemäß Komponente C besitzen vorzugsweise Molekulargewichte $\overline{M}$ (Gewichtsmittel, ermittelt durch Lichtstreuung oder Sedimentation) zwischen 15 000 und 200 000 und Grenzviskositäten ($\eta$) zwischen 20 und 110 ml/g (gemessen in Dimethylformamid bis 25 °C).

Hydrierte Nitrilkautschuke gemäß Komponente D sind Produkte, die durch Hydrieren statistischer Copolymerisate aus 90 bis 45 Gew.-%, bevorzugt 85 bis 50 Gew.-%, insbesondere 82 bis 52 Gew.-%, zumindest eines konjugierten Diens, 10 bis 55 Gew.-%, bevorzugt 15 bis 50 Gew.-%, insbesondere 18 bis 48 Gew.-%, zumindest eines ungesättigten Nitrils und 0 bis 10 Gew.-%, bevorzugt 0 bis 8 Gew.-%, zumindest eines weiteren mit konjugierten Dienen und ungesättigten Nitrilen copolymerisierbaren Monomeren, erhalten wurden.

Als konjugierte Diene kommen z.B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomeren kommen Vinylaromaten, (Meth)Acrylsäureester mit 1 bis 12 Kohlenstoffatomen in der Alkoholkomponente, α,β-ungesättigte Mono- oder Dicarbonsäuren in Betracht.

Als beispielhaft sind zu nennen: für die Vinylaromaten Styrol, substituierte Styrole, wie o-, m-, p-Methylstyrol, Ethylstyrol, ferner Vinylnaphthalin, Vinylpyridin, für die (Meth)Acrylsäureester, Methyl(meth)-acrylat, Ethyl(meth)acrylat, n-Butyl(meth)acrylat, 2-Ethylhexyl(meth)acrylat, 2-Hydroxypropyl(meth)acrylat, für die ungesättigten Carbonsäuren α,β-ungesättigte Monocarbonsäuren mit 3 bis 5 Kohlenstoffatomen, wie Acrylsäure-, Methacrylsäure- und Crotonsäure sowie α,β-ungesättigte Dicarbonsäuren mit 4 bis 5 Kohlenstoffatomen, wie Malein-, Fumar-, Citracon- und Itaconsäure, ferner die Halbester der α,β-ungesättigten Dicarbonsäuren, wie Maleinsäure-n-dodecylhalbester oder Fumarsäure-n-butylhalbester.

Als weitere Monomeren kommen außerdem Vinylchlorid, Vinylidenchlorid, N-Methylolacrylamid, Vinylalkylether mit 1 bis 4 Kohlenstoffatomen in der Alkylgruppe, Vinylester von Carbonsäuren mit 1 bis 18 Kohlenstoffatomen, wie Vinylacetat oder Vinylstearat in Betracht.

Spezielle Beispiele für die zu hydrierenden Copolymerisate umfassen Acrylnitril-Isopren-Copolymerisate, Acrylnitril-Isopren-Butadien-Terpolymerisate, Acrylnitril-Butadien-n-Butylacrylat-Terpolymerisate, Acrylnitril-Butadien-2-Hydroxypropylmethacrylat-Terpolymerisate und Acrylnitril-Butadien-Methacrylsäure-Terpolymerisate. Acrylnitril-Butadien-Copolymerisate sind besonders bevorzugt.

Die Herstellung hydrierter Nitrilkautschuke unter Erhalt der Nitrilgruppen ist z.B. aus DE-OS 3 329 974 bekannt.

Der Hydriergrad (Prozentsatz der hydrierten C-C-Doppelbindungen, bezogen auf die Gesamtzahl der ursprünglich im Polymeren vorhandenen C-C-Doppelbindungen) des Polymeren gemäß Komponente D wird IR- oder NMR-spektroskopisch bestimmt und beträgt mindestens 80 %, vorzugsweise mindestens 90 %, insbesondere größer als 95 %.

Die hydrierten Polymeren gemäß Komponente D sind gelfrei und in Ketonen, wie Aceton oder Butanon, in Ethern, wie Tetrahydrofuran oder Dioxan, oder in chlorierten Kohlenwasserstoffen, wie Dichlormethan oder Chlorbenzol löslich. Die Molekulargewichte der hydrierten Nitrilkautschuke liegen zwischen 500 und

800 000 (g/mol), bevorzugt zwischen 10 000 und 600 000 (g/mol), insbesondere zwischen 30 000 und 400 000 (g/mol) ($\overline{M}$n, Zahlenmittel, ermittelt durch Gelpermeationschromatographie).

Die erfindungsgemäßen Formmassen können weitere, für Polycarbonate, Pfropfpolymerisate oder thermoplastische Copolymerisate bekannte Zusätze, wie Entformungsmittel, Stabilisatoren, Pigmente, Flammschutzmittel und Antistatika in den üblichen Mengen enthalten.

Die erfindungsgemäßen Formmassen bestehend aus den Komponenten A, B, C, D und gegebenenfalls Entformungsmitteln, Stabilisatoren, Pigmenten, Flammschutzmitteln und/oder Antistatika werden hergestellt, indem man die jeweiligen Bestandteile in bekannter Weise vermischt und bei Temperaturen von 200 bis 300 ° C in üblichen Aggregaten, wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von thermoplastischen Formmassen, bestehend aus den Komponenten A, B, C, D und gegebenenfalls Entformungsmitteln, Stabilisatoren, Pigmenten, Flammschutzmitteln und/oder Antistatika, das dadurch gekennzeichnet ist, daß man die Komponenten A, B, C, D und gegebenenfalls Entformungsmittel, Stabilisatoren, Pigmente, Flammschutzmittel und/oder Antistatika in bekannter Weise vermischt und danach bei Temperaturen von 200 bis 330 ° C in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20 ° C (Raumtemperatur) als auch bei höherer Temperatur.

Die Formmassen der vorliegenden Erfindung können aus Herstellung von Formkörpern jeder Art verwendet werden. Insbesondere können Formkörper durch Spritzguß hergestellt werden. Beispiele für herstellbare Formkörper sind Gehäuseteile für Haushaltsgeräte, Formteile für den Kfz-Innenraum und insbesondere für den Kfz-Außenbereich.

Eine weitere Form der Verarbeitung ist die Herstellung von Formkörpern durch Tiefziehen aus vorher hergestellten Platten oder Folien.

Teilchengröße bedeutet immer mittlere Teilchendurchmesser $d_{50}$, ermittelt durch Ultrazentrifugenmessungen nach W. Scholtan et al., Kolloid-Z. und Z. Polymere 250 (1972), 782 bis 796.

Der Siloxangehalt im Polydiorganosiloxan-Polycarbonat-Blockcopolymeren, d.h. der Anteil der Dimethylsiloxy-Einheiten in Gew.-%, bezogen auf das Gesamtgewicht des Blockcopolymeren, kann gravimetrisch und durch Kernresonanzspektrometrie ermittelt werden. Als mittlere Siloxanblocklänge wird der durch Bestimmung der Endgruppe am Siloxan-Prepolymer (Formel Ia) ermittelte Polymerisationsgrad Pn angegeben.

## Beispiele

### Eingesetzte Polymere

A.1

Lineares Polycarbonat auf Basis Bisphenol A und 5 Gew.-%, bezogen auf Gewicht Polycarbonat, an Polydimethylsiloxan der Blocklänge (Pn) 40 mit einer relativen Lösungsviskosität $\eta_{rel}$ von 1,31, gemessen in $CH_2Cl_2$ bei 25 ° C und in einer Konzentration von 0,5 g/100 ml;

A.2

Lineares Polycarbonat auf Basis Bisphenol A mit einer relativen Lösungsviskosität ($\eta_{rel}$ von 1,26 bis 1,28, gemessen in $CH_2Cl_2$ bei 25 ° C in einer Konzentration von 0,5 g/100 ml;

B.1

SAN-Pfropfpolymerisat von 50 % Styrol/Acrylnitril-Gemisch (im Gewichtsverhältnis von 72:28) auf 50 % teilchenförmiges Polybutadien mit einer mittleren Teilchengröße ($d_{50}$) von 0,4 $\mu$m, erhalten durch Emulsionspolymerisation;

C.

Styrol/Acrylnitril-Copolymerisat mit einem Styrol/Acrylnitril-Verhältnis von 72:28 und einer Grenzviskosität von $[\eta]$ = 0,55 dl/g (Messung in Dimethylformamid bei 20 ° C);

D.

Hydrierte Nitrilkautschuke aus einem statistischen Acrylnitril-Butadien-Copolymer mit einem Acrylnitrilgehalt von 34,9 Gew.-%, der einen Hydriergrad von 99,7 % (infrarotspektroskopisch bestimmt) und eine Mooney-Viskosität ML 1 + 4 (100 ° C) von 71 aufweist (gemessen nach DIN 53 523).

### Compoundierung

Die Compoundierung der Komponenten erfolgte auf einem 1,3-l-Innenkneter bei einer Temperatur von

200 bis 220 ° C.

Verarbeitung:

Das bei der Compoundierung erhaltene Granulat wurde in einer Spritzgießmaschine bei 260, 280, 300 ° C Massetemperatur und 80 ° C Formtemperatur zu für die einzelnen prüfungen erforderlichen Formkörper verarbeitet.

Prüfungen

Spannungsrißverhalten:

Das Spannungsrißverhalten wurde an Proportionalstäben 0,7, Massetemperatur 260 ° C, gemäß DIN 53 449/3 untersucht. Als Kraftstoffsimulanz wurde eine Mischung aus 50 % Toluol und 50 % Isooctan verwendet. Die Probekörper wurden mittels einer Kreisbogenschablone vorgedehnt und 5 min bei 23 ° C im Kraftstoffsimulant gelagert. Die Vordehnung $\epsilon_x$ betrugen 0 bis 2 %. Das Spannungsrißverhalten wurde über die Rißbildung bzw. den Bruch in Abhängigkeit der Vordehnung beurteilt.

Kerbschlagzähigkeit nach Izod:

Die Bestimmung der Kerbschlagzähigkeit nach Izod erfolgte an Stäben der Abmessung 2,5 x 1/2 x 1,8", Massetemperatur 260 ° C, gemäß ASTM-D-256. Die Bestimmung der Thermostabilität erfolgte über die Izod-Kerbschlagzähigkeit gemäß ASTM-D-256 an bei 280 und 300 ° C über Spritzguß hergestellten Formkörpern.

Die erfindungsgemäßen Beispiele zeigen, daß durch Verwendung der erfindungsgemäßen Copolymerisate D Formmassen erhalten werden, die neben einer ausgezeichneten Zähigkeit sowohl bei Raumtemperatur als auch bei tiefen Temperaturen und Thermostabilität ein deutlich verbessertes Spannungsrißverhalten gegenüber organischen Medien aufweisen.

**Tabelle 1**

**Zusammensetzung**

| Beispiele Nr. | | 1 | 2 | 3 | 4 | 5 (Vergleichsversuche) | 6 (Vergleichsversuche) |
|---|---|---|---|---|---|---|---|
| Komponenten | A.1 | 60 | 60 | - | - | 60 | - |
| | A.2 | - | - | 60 | 60 | - | 60 |
| | B | 24 | 24 | 24 | 24 | 24 | 24 |
| | C | 16 | 16 | 16 | 16 | 16 | 16 |
| | D | 4 | 7 | 3 | 5 | - | - |

**Tabelle 2**

**Spannungsrißverhalten**

| Beispiel Nr. | 1 | 2 | 3 | 4 | 5 (Vergleichsversuche) | 6 (Vergleichsversuche) |
|---|---|---|---|---|---|---|
| Vordehnung $\varepsilon_x$ % | | | | | | |
| 0,2 | o.B.* | o.B. | o.B. | o.B. | o.B. | KR |
| 0,4 | o.B. | o.B. | KR | | o.B. | KR |
| 0,6 | o.B. | o.B. | KR | KR | o.B. | gebr. |
| 0,8 | o.B. | o.B. | gebr. | KR | gebr. | |
| 1,0 | KR* | o.B. | | KR | | |
| 1,2 | KR | o.B. | | gebr. | | |
| 1,4 | gebr.* | KR | | | | |
| 1,6 | | KR | | | | |
| 1,8 | | KR | | | | |
| 2,0 | | KR | | | | |

*) o.B.: ohne Befund;
KR: Kantenrisse;
gebr.: gebrochen

**Tabelle 3**

Kerbschlagzähigkeit

| Beispiel Nr. | 1 | 2 | 3 | 4 | 5 | 6 |
|---|---|---|---|---|---|---|
| | | | | | (Vergleichsversuche) | |
| $A_k$ Izod (J/m) | | | | | | |
| 260° C 23° C | 780 | 870 | 675 | 760 | 665 | 665 |
| -20° C | 710 | 740 | 545 | 580 | 635 | 520 |
| 280° C 23° C | 670 | 655 | 620 | 615 | 635 | 625 |
| 300° C 23° C | 565 | 615 | 570 | 585 | 470 | 540 |
| Zäh/Spröd-Übergang (° C) | <-50 | <-50 | <-40 | <-40 | <-50 | <-40 |

## Patentansprüche

**1.** Thermoplastische Formmassen, bestehend aus

A.
20-80 Gew.-Tl. eines oder mehrerer thermoplastischer Polycarbonate,

B.
10-60 Gew.-Tl. eines oder mehrerer Pfropfpolymerisate aus

B.1
5-90 Gew.-Tl. einer Mischung aus

B.1.1
50-95 Gew.-Tl. Styrol, α-Methylstyrol, kernsubstituiertem Styrol, Methylmethacrylat oder Mischungen daraus, und

B.1.2

50-5 Gew.-Tl. (Meth)Acrylnitril, Methylmethacrylat, Maleinsäureanhydrid, N-substituiertem Maleinimid oder Mischungen daraus, auf

B.2

95-10 Gew.-Tl. eines Kautschuks mit einer Glastemperatur $T_G \leqq 10\,^\circ C$ und

C.

5-70 Gew.-Tl. eines thermoplastischen Copolymerisats aus

C.1

50-95 Gew.-Tl. Styrol, $\alpha$-Methylstyrol, kernsubstituiertem Styrol, Methylmethacrylat oder Mischungen daraus, und

C.2

50-5 Gew.-Tl. (Meth)Acrylnitril, Methylmethacrylat, Maleinsäureanhydrid, N-substituiertem Maleinimid oder Mischungen daraus, wobei die Summe der Gew.-Tl. aus A + B + C jeweils 100 Gew.-Tl. beträgt, dadurch gekennzeichnet, daß sie

D.

1-15 Gew.-Tl., bezogen auf 100 Gw.-Tl. A + B + C, eines hydrierten Nitrilkautschuks enthalten.

**2.** Formmassen gemäß Anspruch 1, dadurch gekennzeichnet, daß die Komponente A ein Polydiorganosiloxan-Polycarbonat-Blockcopolymer ist, wobei der Gewichtsanteil der Diphenole (Ia), bezogen auf die Gesamtsumme der Diphenole, im Blockcopolymer zwischen 1 und 20 Gew.-% liegt.

**3.** Formmassen gemäß Anspruch 1, dadurch gekennzeichnet, daß die Komponente A ein Gemisch aus mehreren thermoplastischen Polycarbonaten ist und wobei, wenn es sich um Mischungen mit Polydiorganosiloxan-Polycarbonat-Blockcopolymeren handelt, der Gewichtsanteil der Diphenole (Ia), bezogen auf die Gesamtsumme der Diphenole in der Polycarbonatmischung, zwischen 1 und 20 Gew.-% liegt.

**4.** Formmassen gemäß Anspruch 1, dadurch gekennzeichnet, daß die Komponente A in Mengen von 40 bis 80 Gew.-Tl. eingesetzt wird.

**5.** Formmassen gemäß Anspruch 1, dadurch gekennzeichnet, daß die Komponente B in Mengen von 10 bis 40 Gew.-Tl. eingesetzt wird.

**6.** Formmassen gemäß Anspruch 1, dadurch gekennzeichnet, daß die Komponente C in Mengen von 10 bis 40 Gew.-Tl. eingesetzt wird.

**7.** Formmassen gemäß Anspruch 1, dadurch gekennzeichnet, daß die Komponente D in Mengen von 2 von 2 bis 10 Gew.-Tl. eingesetzt wird.

**8.** Formmassen gemäß Anspruch 1, dadurch gekennzeichnet, daß die Komponente B aus 30 bis 80 Gew.-Tl. B.1 und 70 bis 20 Gew.-Tl. B.2 zusammengesetzt ist.

**9.** Formmassen gemäß Anspruch 1, dadurch gekennzeichnet, daß sie außerdem Entformungsmittel, Stabilisatoren, Pigmente, Flammschutzmittel und/oder Antistatika enthalten.

**10.** Verfahren zur Herstellung der Formmassen gemäß Ansprüche 1 bis 9, dadurch gekennzeichnet, daß man die Komponenten A, B, C, D und gegebenenfalls Entformungsmittel, Stabilisatoren, Pigmente, Flammschutzmittel und/oder Antistatika in bekannter Weise vermischt und danach bei Temperaturen von 200 bis 330 °C in gebräuchlichen Aggregaten schmelzcompoundiert oder schmelzextrudiert.

## Claims

**1.** Thermoplastic moulding compounds, consisting of

A.

20 to 80 parts by weight of one or more thermoplastic polycarbonates,

B.

10 to 60 parts by weight of one or more graft polymers of

B.1

5 to 90 parts by weight of a mixture of

B.1.1
50 to 95 parts by weight of styrene, α-methyl styrene, nucleus-substituted styrene, methyl methacrylate or mixtures thereof, and
B.1.2
50 to 5 parts by weight of (meth)acrylonitrile, methyl methacrylate, maleic anhydride, N-substituted maleimide or mixtures thereof on
B.2
95 to 10 parts by weight of a rubber having a glass transition temperature $T_G$ of ≦10 ° C and
C.
5 to 70 parts by weight of a thermoplastic copolymer of
C.1
50 to 95 parts by weight of styrene, α-methyl styrene, nucleus-substituted styrene, methyl methacrylate or mixtures thereof and
C.2
50 to 5 parts by weight of (meth)acrylonitrile, methyl methacrylate, maleic anhydride, N-substituted maleimide or mixtures thereof, the sum of the parts by weight of A + B + C adding up to 100 parts by weight,
characterized in that they contain
D.
1 to 15 parts by weight, based on 100 parts by weight of A + B + C, of a hydrogenated nitrile rubber.

**2.** Moulding compounds as claimed in claim 1, characterized in that component A is a polydiorganosiloxane polycarbonate block copolymer in which the percentage by weight of diphenols (Ia), based on the total sum of diphenols in the block copolymer, is from 1 to 20% by weight.

**3.** Moulding compounds as claimed in claim 1, characterized in that component A is a mixture of several thermoplastic polycarbonates and, when it is a mixture containing polyidorganosiloxane-polycarbonate block copolymers, the ratio by weight of diphenols (Ia), based on the total sum of diphenols in the polycarbonate mixture, is 1 to 20% by weight.

**4.** Moulding compounds as claimed in claim 1, characterized in that component A is used in quantities of 40 to 80 parts by weight.

**5.** Moulding compounds as claimed in claim 1, characterized in that component B is used in quantities of 10 to 40 parts by weight.

**6.** Moulding compounds as claimed in claim 1, characterized in that component C is used in quantities of 10 to 40 parts by weight.

**7.** Moulding compounds as claimed in claim 1, characterized in that component D is used in quantities of 2 to 10 parts by weight.

**8.** Moulding compounds as claimed in claim 1, characterized in that component B is composed of 30 to 80 parts by weight of B.1 and 70 to 20 parts by weight of B.2.

**9.** Moulding compounds as claimed in claim 1, characterized in that they also contain mould release agents, stabilizers, pigments, flameproofing agents and/or antistatic agents.

**10.** A process for the production of the moulding compounds claimed in claims 1 to 9, characterized in that components A, B, C and D and optionally mould release agents, stabilizers, pigments, flameproofing agents and/or antistatic agents are mixed together in known manner and then melt-compounded or melt-extruded in typical machines at temperatures of 200 to 330 ° C.

## Revendications

**1.** Matières à mouler thermoplastiques consistant en :
A.

20 à 80 parties en poids d'un ou plusieurs polycarbonates thermoplastiques,
B.
10 à 60 parties en poids d'un ou plusieurs polymères greffés de
B.1
5 à 90 parties en poids d'un mélange de :
B.1.1
50 à 95 parties en poids de styrène, d'α-méthylstyrène, d'un styrène substitué dans le noyau, de méthacrylate de méthyle ou leurs mélanges, et
B.1.2
50 à 5 parties en poids de (méth)acrylonitrile, de méthacrylate de méthyle, d'anhydride maléique, d'un maléimide substitué à l'azote ou leurs mélanges, sur
B.2
95 à 10 parties en poids d'un caoutchouc présentant une température de transition du second ordre $T_G$ inférieure ou égale à 10°C, et
C.
5 à 70 parties en poids d'un copolymère thermoplastique de :
C.1
50 à 95 parties en poids de styrène, d'α-méthylstyrène, d'un styrène substitué dans le noyau, de méthacrylate de méthyle ou leurs mélanges, et
C.2
50 à 5 parties en poids de (méth)acrylonitrile, de méthacrylate de méthyle, d'anhydride maléique, d'un maléimide substitué à l'azote ou leurs mélanges, la somme des parties en poids de A + B + C étant dans tous les cas de 100 parties en poids, caractérisées en ce qu'elles contiennent
D.
1 à 15 parties en poids, pour 100 parties en poids de A + B + C, d'un caoutchouc nitrile hydrogéné.

2. Matières à mouler selon revendication 1, caractérisées en ce que le composant A est un copolymère séquencé polydiorganosiloxane-polycarbonate dans lequel la proportion en poids des diphénols Ia, par rapport à la somme totale des diphénols, est de 1 à 20 % en poids.

3. Matières à mouler selon revendication 1, caractérisées en ce que le composant A est un mélange de plusieurs polycarbonates thermoplastiques et en ce que, lorsqu'il s'agit de mélanges avec des copolymères séquencés polydiorganosiloxane-polycarbonate, la proportion en poids des diphénols Ia, par rapport à la somme totale des diphénols, dans le mélange de polycarbonates, est de 1 à 20 % en poids.

4. Matières à mouler selon revendication 1, caractérisées en ce que le composant A est mis en oeuvre en quantités de 40 à 80 parties en poids.

5. Matières à mouler selon revendication 1, caractérisées en ce que le composant B est mis en oeuvre en quantités de 10 à 40 parties en poids.

6. Matières à mouler selon revendication 1, caractérisées en ce que le composant C est mis en oeuvre en quantités de 10 à 40 parties en poids.

7. Matières à mouler selon revendication 1, caractérisées en ce que le composant D est mis en oeuvre en quantités de 2 à 10 parties en poids.

8. Matières à mouler selon revendication 1, caractérisées en ce que le composant B est composé de 3 à 80 parties en poids de B.1 et 70 à 20 parties en poids de B.2.

9. Matières à mouler selon revendication 1, caractérisées en ce qu'elles contiennent en outre des agents de démoulage, des stabilisants, des pigments, des agents ignifugeants et/ou des agents antistatiques.

10. Procédé de préparation des matières à mouler selon revendications 1 à 9, caractérisé en ce que l'on mélange de manière connue en soi les composants A, B, C, D et le cas échéant les agents de démoulage, les stabilisants, les pigments, les agents ignifugeants et/ou les agents antistatiques, puis on

procède à un mélange à l'état fondu ou une extrusion à l'état fondu à des températures de 200 à 330 ° C dans des appareils usuels.